# EUROPÄISCHE PATENTSCHRIFT

(11) **EP 0 938 408 B1**
(45) Veröffentlichungstag und Bekanntmachung des Hinweises auf die Patenterteilung: **16.04.2003**
(21) Anmeldenummer: 98948965.3
(22) Anmeldetag: 11.09.1998
(51) Int. Cl.: B29C 73/16

(54) **VORRICHTUNG ZUM BEHEBEN EINER REIFENPANNE**
DEVICE FOR REPAIRING A TYRE FAULT
DISPOSITIF POUR REMEDIER A UNE DEFAILLANCE D'UN PNEUMATIQUE

(30) Priorität: 12.09.1997 DE 29716453 U
(43) Veröffentlichungstag der Anmeldung: 01.09.1999
(73) Patentinhaber: Ventrex Automotive GmbH, 8010 Graz (AT)
(72) Erfinder: THURNER, Helmut, D-94086 Bad Griesbach-Reuthen (DE)
(74) Vertreter: Hofstetter, Alfons J., Dr.rer.nat.
(86) Internationale Anmeldenummer: EP9805807
(87) Internationale Veröffentlichungsnummer: WO99014031

(56) Entgegenhaltungen:
- EP-A- 0 753 420
- DE-A- 2 629 438
- DE-A- 4 009 705
- DE-U- 8 706 265
- FR-A- 725 829
- FR-A- 2 208 313
- FR-A- 2 638 966
- US-A- 2 812 783

## Beschreibung

Die vorliegende Erfindung betrifft eine Vorrichtung zum Beheben einer Reifenpanne mit einer in den zu reparierenden Reifen einzuführenden Flickflüssigkeit, die sich in einem komprimierbaren flüssigkeitsspeichernden Volumen befindet.

Derartige Vorrichtungen sind bekannt. Sie werden in einem Kraftfahrzeug mit oder vorzugsweise ohne Reserverad mitgeführt.

Die meisten Reifenpannen werden durch Eindringen von scharfen Gegenständen, wie Nägel oder Glasscherben oder ähnlichem, in die Lauffläche von Reifen verursacht. Durch eine erhebliche Qualitätsverbesserung der Reifen sind selbst diese Pannen selten geworden. Es werden deshalb Überlegungen angestellt, auf ein Reserverad oder auch auf ein Notrad ganz zu verzichten. Dadurch kann im Kraftfahrzeug Platz gespart werden oder der gewonnene Raum besser als Transportvolumen benutzt werden. Dies gilt insbesondere für Kompakt- oder Kleinfahrzeuge oder für Sportwagen. Wenn statt des Reserverades ein platzsparender Reparatursatz mitgeführt wird, mit dem sich der Kraftfahrer bei einer Reifenpanne selbst helfen kann, ohne das Rad an Ort und Stelle mit dem beschädigten Reifen abmontieren zu müssen, braucht auch kein entsprechend anderes Werkzeug für einen Radwechsel und ein Wagenheber mitgeführt zu werden. Alles zusammengenommen führt zu einer erheblichen Gewichtsersparnis.

Die bis heute bekannten Vorrichtungen bzw. Reparatursätze sind aber noch nicht benutzerfreundlich genug. Die Reparatur wird nach dem eventuell notwendigen Entfernen des schädigenden Teils aus der Reifenfläche mit einer Reparatur- oder Flickflüssigkeit vorgenommen, die in den beschädigten Reifen eingebracht wird. Dann wird mit einem zum Reparatursatz gehörenden Kleinkompressor, der elektrisch aus dem Bordnetz des Kraftfahrzeuges betrieben werden kann, mit Druck die Flickflüssigkeit verfestigt und der reparierte Reifen aufgepumpt. Hierbei kann das Rad mit dem reparierten Reifen am Fahrzeug bleiben. Während des Flickvorgangs sollte jedoch das Fahrzeug einige Meter bewegt werden, um die Flickflüssigkeit im Reifen zu verteilen.

Aus dem Dokument FR-A-2 638 966 ist eine autonome, tragbare und sterile Dusche zum Waschen von durch insbesondere von chemischen Produkten angegriffenen Teilen des menschlichen oder tierischen Körpers beschrieben. Gemäß einem generellen Funktionsprinzip weist diese Vorrichtung ein flüssigkeitsspeicherndes Volumen mit mindestens einer ersten zu öffnenden Verschlußstelle auf, wobei sich das Volumen in einem Druckbehälter befindet. Der Druckbehälter wird mit von einer Druckgasquelle geliefertem Druckgas in einem sich unter der Wirkung des Druckgases vergrößernden Kompressionsraumes beaufschlagt und die erste Verschlußstelle wird geöffnet. Das Volumen gibt dabei über die erste geöffnete Verschlußstelle und einen Zuführschlauch die in ihm befindliche Flüssigkeit ab, bis keine Flüssigkeit mehr gefördert wird.

Eine bekannte Vorrichtung zum Beheben einer Reifenpanne bzw. ein bekannter Reparatursatz besteht aus lose zusammengefügten Einzelteilen. Die Reparaturflüssigkeit befindet sich in einer von Hand zusammendrückbaren Flasche und wird auf diese Weise über einen Zuführungsschlauch in den Reifen eingefüllt. Für diesen Vorgang muss das Reifenventil entfernt werden und anschließend wieder eingesetzt werden. Überschüssiges Flickmittel muss eventuell abgesaugt werden. Dann wird der Reifen in der oben beschriebenen Weise aufgepumpt.

Ein anderer bekannter Reparatursatz ist zwar in einem Gehäuse zusammengefasst und das Füllen und Aufpumpen kann kontinuierlich erfolgen. Die Flickflüssigkeit befindet sich dabei in einer druckfesten Metallflasche, die schwer ist. Mittels des durch den ebenfalls im Gehäuse des Reparatursatzes eingebauten Kleinkompressors wird sie durch Einleiten von Druckgas in die Metallflasche über einen Zuführungsschlauch in den Reifen geleert. In der Metallflasche befindet sich ein Steigrohr. Sobald dieses keine Flüssigkeit erfasst, wird das Druckgas in den Reifen geleitet. Hierbei ist es erforderlich, daß die Metallflasche senkrecht bleibt. Der Betrieb ist lageabhängig.

Ferner ist bei dieser Betriebsart ein Rückschlagventil erforderlich. Die Metallflaschen müssen zudem nach der Benutzung gereinigt werden, bevor sie wieder nachgefüllt werden. Außerdem ist jede Metallflasche, auch wenn sie nicht benutzt wurde, alle zwei bis drei Jahre auszutauschen. Auch beim Austausch der Flaschen werden diese gereinigt und neu befüllt. Außer dem Gewicht schlagen deshalb bei der Benutzung dieses Reparatursatzes hohe Kosten zu Buche.

Demgegenüber liegt der vorliegenden Erfindung die Aufgabe zugrunde, eine Vorrichtung zum Beheben einer Reifenpanne der eingangs genannten Art bereitzustellen, die wenig Gewicht aufweist, preiswert ist und eine benutzerfreundliche Bedienung gewährleistet.

Zur Lösung dieser Aufgabe dient eine Vorrichtung gemäß den Merkmalen des unabhängigen Anspruchs 1.

Vorteilhafte Ausgestaltungen sind in den Unteransprüchen beschrieben.

Die erfindungsgemäße Lösung greift auf die bekannten zusammendrückbaren Flaschen mit Flickflüssigkeit zurück. Diese werden jedoch erfindungsgemäß nicht von Hand zusammengedrückt, sondern die Flickflüssigkeit enthaltende flüssigkeitsspeichernde Volumen ist mit mindestens einer ersten zu öffnenden Verschlußstelle dicht verschlossen und befindet sich in einem Druckbehälter, der mit von einer Druckgasquelle geliefertem Druckgas in einem sich unter der Wirkung des Druckgases vergrößernden Kompressionsraum beaufschlagt wird und die erste Verschlußstelle geöffnet wird, wobei das Volumen über die geöffnete erste Verscblußstelle und einen Zuführschlauch die in ihm befindliche Flickflüssigkeit solange an den Reifen abgibt, bis keine Flickflüssigkeit mehr gefördert wird, wonach der Druck in einem Raum, der über dem Druckbehälter angeordnet ist, abfällt und die Druckdifferenz zwischen einem Zuführweg für das Druckgas und dem Raum ansteigt und mindestens eine zweite zu öffnende Verschlußstelle, die zwischen dem Zuführweg und dem Raum angeordnet ist, aufgrund der angestiegenen Druckdifferenz geöffnet wird und einen Weg von der Druckgasquelle über den Zuführschlauch an den Reifen freigibt.

Der Reparaturvorgang läuft dadurch vorteilhafterweise von selbst kontinuierlich ab und kann von jedem Laien leicht gehandhabt werden. Das Gerät ist hierbei völlig lageunabhängig.

In einer vorteilhaften Ausgestaltung der Erfindung wird die erste Verschlußstelle durch die Druckbeaufschlagung des Kompressionsraums und der resultierenden Komprimierung des Volumens geöffnet. Dadurch erfolgt eine automatische Öffnung der ersten Verschlußstelle ohne das weitere Hilfsmittel verwendet werden müssen. Dies bedeutet zum einen, daß die Vorrichtung insgesamt leichter und auch kostengünstiger ausgebildet werden kann.

Es ist gemäß einer anderen erfindungsgemäßen Ausführungsform auch möglich, daß die erste Verschlußstelle und/oder die zweite Verschlußstelle manuell, mechanisch, elektrisch, pneumatisch oder hydraulisch gesteuert und geöffnet bzw. geschlossen wird.

Weitere Einzelheiten, Merkmale und Vorteile der Erfindung ergeben sich aus der nachfolgenden Beschreibung von mehreren in den Figuren dargestellten Ausführungsbeispielen.

Es zeigen:
- Fig. 1: eine schematische perspektivische Darstellung der erfindungsgemäßen Vorrichtung zum Beheben einer Reifenpanne in seiner Anwendung,
- Fig. 2: eine schematische Darstellung der erfindungsgemäßen Vorrichtung,
- Fig. 3: eine schematische Detaildarstellung der erfindungsgemäßen Vorrichtung gemäß Figur 2,
- Fig. 4: im schematische Detaildarstellung einer Verschlußstelle der erfindungsgemäßen Vorrichtung, und
- Fig. 5: eine schematische Darstellung einer weiteren Ausführungsform der erfindungsgemäßen Vorrichtung.

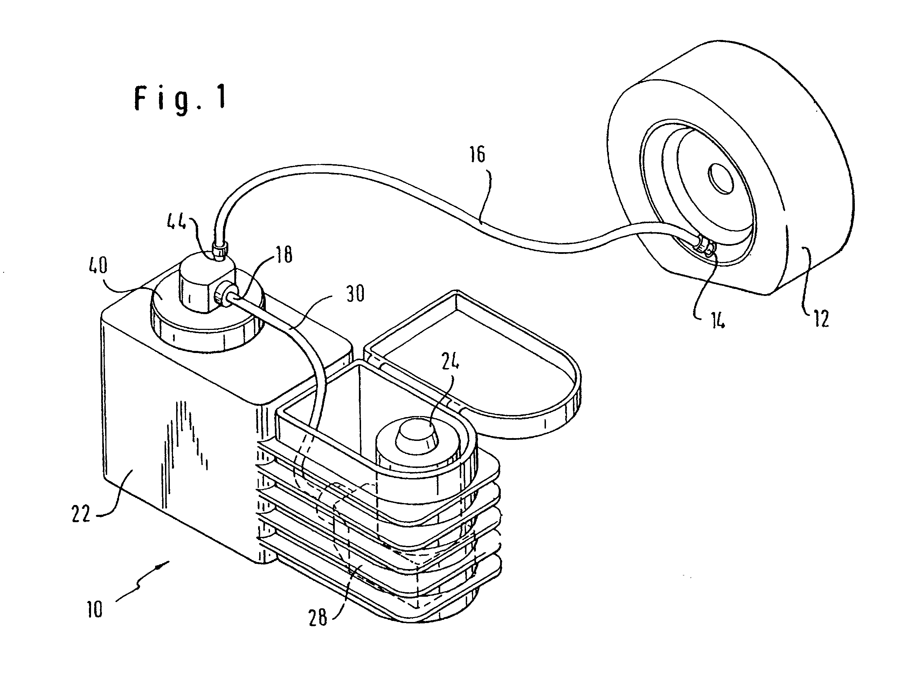

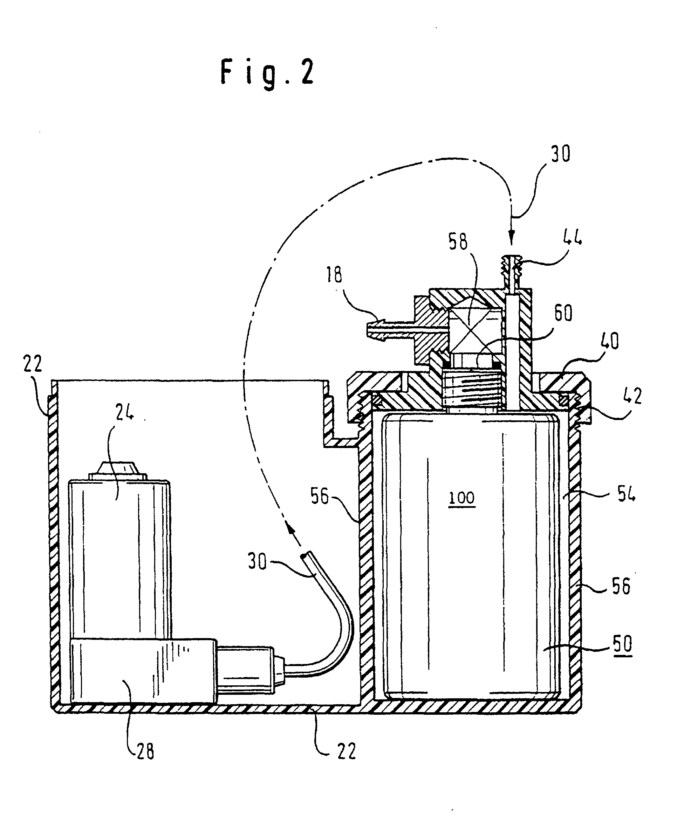

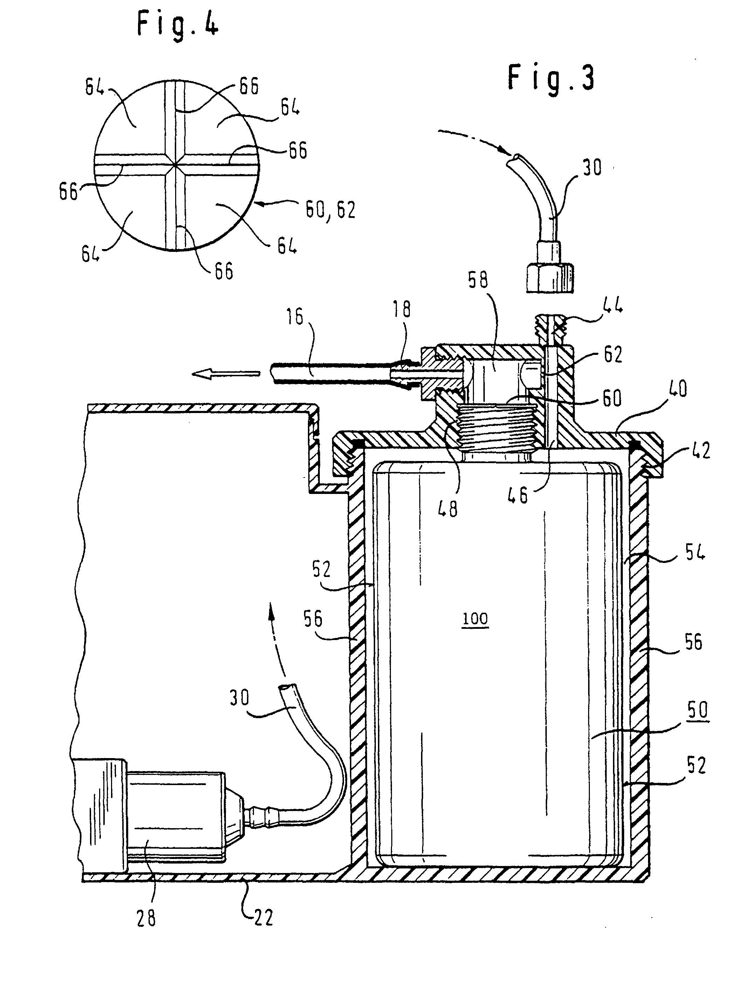

Aus der schematischen Darstellung von Figur 1 geht die an sich bekannte Anwendung einer Vorrichtung zum Beheben einer Reifenpanne 10 hervor. In einem Gehäuse 22 der Vorrichtung 10 ist ein auswechselbares Volumen 100, in diesem und in den Ausführungsbeispielen der Figuren 2 und 3 eine Flasche 50, in der sich Reifenflickflüssigkeit befindet, in einem druckfesten Behälter 56 untergebracht. Der für die Handhabung erforderliche Druck wird von einem Kleinkompressor 28 erzeugt, der von einem aus dem Bordnetz eines Kraftfahrzeuges betreibbaren Elektromotor 24 angetrieben werden kann. Mit Hilfe des vom Kompressor 28 aufgebauten Gasdrucks wird in zwei unmittelbar aufeinanderfolgenden Stufen, wie nachstehend noch näher beschrieben werden wird, die Reifenflickflüssigkeit in einen zu reparierenden Reifen 12, der mit seinem Rad während der Reparatur am Fahrzeug verbleiben kann, über einen Schlauch 16 eingeleitet.

Figur 2 zeigt eine schematische Darstellung der Vorrichtung 10, Figur 3 eine schematische Detaildarstellung der Vorrichtung 10 gemäß Figur 2.

Im Inneren des Gehäuses 22 befindet sich ein fester Druckbehälter 56, in den das Volumen 100 mit der Flickflüssigkeit, daß hier als Flasche 50 ausgebildet ist, eingesetzt wird. Die Flasche 50 besteht aus einem festen, aber flexiblen Material, das sich leicht zusammendrücken läßt. Aus dem Stand der Technik sind solche mit Flickflüssigkeit gefüllte, zusammendrückbare Flaschen bekannt. Nach diesem Stand der Technik werden diese Flaschen von Hand zusammengedrückt und auf diese Weise wird die Flüssigkeit in den zu flickenden Reifen eingegeben.

Gemäß der vorliegenden Erfindung wird diese an sich bekannte Flasche 50 modifiziert. Unterhalb eines Deckels, der die Flasche 50 oberhalb eines Schraubgewindes 48 im normalen oder Transportzustand verschließt, wird eine ebenfalls dicht schließende, dünne Haut als erste Verschlußstelle 60 angeordnet. Im vorliegenden Ausführungsbeispiel wird gezeigt, wie die Flasche 50 ohne den Transportdeckel in einem Kopfdeckel 40 mit dem Schraubgewinde 48 fest eingeschraubt ist. Der Kopfdeckel 40 ersetzt hierbei den nicht eingezeichneten Transportdeckel.

Dieser Deckel 40 wird druckfest und dicht mit dem Druckbehälter 56 verbunden, beispielsweise durch einen weiteren Schraubverschluß 42. Die Dimensionierung erfolgt in der Weise, daß der Druckbehälter 56 in seinem seitlichen periphären inneren Umfang etwas größer gehalten ist als der Umfang der Flasche 50. Auch oben unterhalb des Kopfdeckels 40 besteht bis zum oberen Rand der Flasche 50 ein Abstand. Dadurch entsteht ein Kompressionsraum 54. Dieser Kompressionsraum 54 wird im Kopfdeckel 40 über einen Kanal 46 mit einem Gaseinlaß 44 und über eine Leitung 30 mit der Druckseite des Kompressors 28 verbunden. Wird der Antrieb des Kompressors 28 eingeschaltet, beispielsweise dadurch, daß der Elektromotor 24 mit dem Bordnetz des Kraftfahrzeuges verbunden wird, dann wird Druckgas in den Kompressionsraum 54 eingeleitet, wodurch die Flasche 50 zusammenpreßt wird. Infolge dieses äußeren Drucks platzt die Verschlußstelle 60 und die Flickflüssigkeit wird über einen Raum 58 im Kopfdeckel 40 sowie über den Schlauch 16 in den defekten Reifen 12 transportiert, und zwar solange, bis die Flasche 50 ihren Inhalt an den Reifen 12 abgegeben hat.

Nach dem Leeren der Flasche läuft der Kompressor 28 weiter. Dadurch fällt der Druck in dem Raum 58, der über dem Druckbehälter 56 angeordnet ist, ab und die Druckdifferenz zwischen einem Zuführweg bzw. Kanal 46 für das Druckgas und dem Raum 58 steigt an, so daß eine zweite zu öffnende Verschlußstelle 62, die zwischen dem Zuführweg bzw. Kanal 46 und dem Raum 58 angeordnet ist, aufgrund der angestiegenen Druckdifferenz geöffnet wird und einen Weg von der Druckgasquelle 28 über den Zuführschlauch 16 an den Reifen 12 freigibt. Die zweite Verschlußstelle 62 kann etwa um den vierfachen Wert standfester als die erste Verschlußstelle 60 ausgelegt werden. Dadurch wird in einfacher Weise selbsttätig und ohne Umstecken von Schläuchen die Druckluft nach dem Überleiten der Flickflüssigkeit direkt in den Reifen 12 eingegeben und dadurch das weitere Fordernis erfüllt, die Flickflüssigkeit sofort nach dem Füllen an die Innenwand des defekten Reifens zu drücken und dort zu festigen.

Anschließend wird durch den anhaltenden Druck der geflickte Reifen 12 aufgepumpt. Hierbei spielt die Lage des Gehäuses 22 mit der darin befindlichen Flasche 50 keine Rolle. Die Flasche 50 muß nicht senkrecht gehalten werden.

Der Flickvorgang ist damit beendet und das Gerät muß für einen weiteren Flickvorgang regeneriert werden. Um wieder betriebsbereit zu sein, wird in einer Werkstatt oder in einer Servicestation eine neue Flasche 50 mit Flickflüssigkeit und einer neuen Verschlußstelle 60 eingesetzt. Auch der Kopfdeckel 40 muß zusammen mit dem Schlauch 16 durch einen neuen Deckel mit neuer dichter Verschlußstelle 62 ersetzt werden. Dieser Vorgang ist einfach, da sich die auszuwechselnden Teile aus recycelbaren Kunststoff herstellen lassen.

In weiteren, nicht dargestellten Ausführungsbeispielen kann das Volumen 100 aus einem zumindest teilweise flexiblen und zusammendrückbaren Behälter, z.B. aus einem Blasenspeicher, oder aus einem durch einen Zylinder und einen Kolben definierten Kolbenraum oder aus einer Tube aus flexiblem, dichtem Material bestehen.

Die erste Verschlußstelle 60 und/oder die zweite Verschlußstelle 62 kann zudem manuell, mechanisch, elektrisch, pneumatisch oder hydraulisch gesteuert und geöffnet bzw. geschlossen werden.

Weiterhin kann die zweite Verschlußstelle 62 an einer beliebigen Stelle der Wandung des Volumens 100 angeordnet sein.

Die Verschlußstelle 60, 62 ist im Detail in Figur 4 dargestellt. Hierbei ist es gleichgültig, ob es sich um die erste oder zweite Verschlußstelle 60 oder 62 handelt. In beiden Fällen handelt es sich in vorliegendem Beispiel um eine membranartige, runde Fläche aus einem zunächst reißfesten Material, das bei einem bestimmten vorgegebenen Druck nachgibt. Das Nachgeben findet entlang von mehreren radialen Rißlinien 66 statt, so daß nach dem Platzen oder Bersten der Verschlußstelle 60, 62 mehrere Lappen 64 am Rand hängenbleiben und sich nicht als störende Materialreste unter die Flickflüssigkeit mischen können. Es kann beispielsweise außer einer Kunststofffolie eine Aluminiumfolie verwendet werden deren spätere Risse durch eine Laserbehandlung vorgegeben sind.

Die erste Verschlußstelle 60 und/oder die zweite Verschlußstelle 62 kann aber auch als Ventil ausgebildet sein (nicht dargestellt).

Die erste Verschlußstelle 60 und/oder die zweite Verschlußstelle 62 kann auch mittels einer Schneidevorrichtung (nicht dargestellt) geöffnet werden. Die Schneidevorrichtung kann dabei als hohle Schneide oder spitze Schraube oder Pfeilspitze ausgebildet sein.

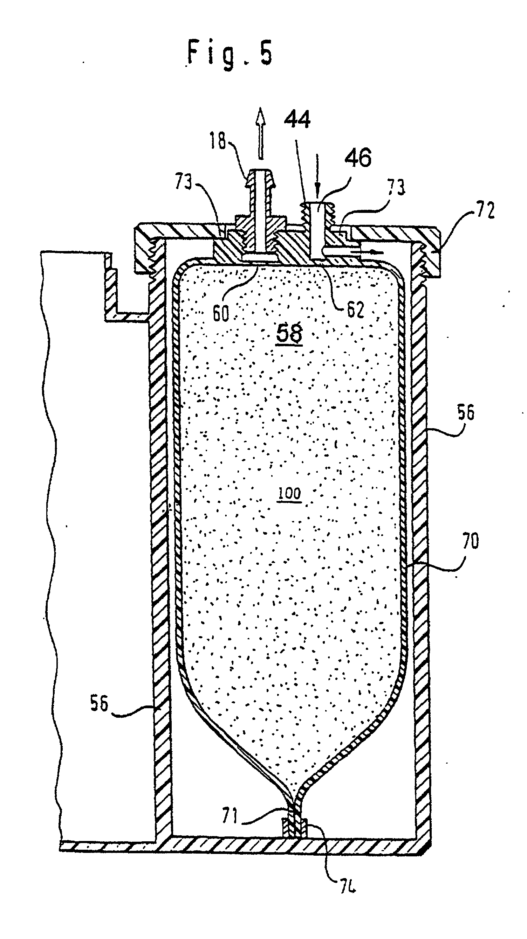

Eine weitere Ausführungsform der Erfindung geht aus Figur 5 hervor. Gemäß diesem Beispiel befindet sich die Flickflüssigkeit in einer Tube 70, die unten mit einem Falz 71 und oben mit einem Anschlußteil 73 verschlossen ist. Dieses Anschlußteil 73 enthält die Gaszuführung 44 und den Schlauchanschluß 18. Der Schlauchanschluß 18 ist zum Innenraum der Tube 70 mit der zuvor beschriebenen Verschlußstelle 60 verbunden und die zweite Verschlußstelle 62 befindet sich ebenfalls in diesem mit der Tube 70 fest verbundenen Teil 73. Die Tube 70 wird in den Druckbehälter 56 eingesetzt, wobei für den Falz 71 eine Schiene 74 zum zusätzlichen Haltern der Tube 70 vorgesehen werden kann. In diesem Fall wird der Druckbehälter oben mit einer Überwurfmutter 72 verbunden, die den Druckbehälter schließt und die das Anschlußteil 73 haltert.

Nach einer weiteren Variante kann das Anschlußteil 73 auch mit der Überwurfmutter 72 fest verbunden sein.

Der Reparaturvorgang erfolgt ähnlich der zuvor beschriebenen Weise. Das vom Kompressor 28 gelieferte Gas erreicht zunächst über den Gaseinlaß 44 den Druckbehälter 56 und preßt die eingesetzte Tube 70 so zusammen, daß die erste Verschlußstelle 60 platzt und der Inhalt der Tube 70 in den Reifen 12 übergeführt wird. Wenn die Tube 70 vollständig ausgepreßt ist und der kontinuierliche Druck weiter geliefert wird, birst wiederum die zweite Verschlußstelle 62, die sich in diesem Ausführungsbeispiel jedoch in das Innere der Tube 70 öffnet. Dadurch dehnt sich die Tube 70 sehr schnell wieder auf und das weitere nachgelieferte Gas wird über die weiterhin offene Verschlußstelle 60 und den Anschluß 18 in den Reifen 12 weitergeleitet und übt dort die Verfestigungs- und Füllfunktion des dadurch geflickten Reifens 12 aus. Der Vorteil der zweiten Ausführungsform gegenüber der ersten Ausführungsform ist der, daß das Auswechseln der Tube 70 mit dem aufgesetzten Einsatz 73 einfacher ist als das Auswechseln der zuvor beschriebenen Flasche 50.

Die Vorrichtung 10 ist grundsätzlich geeignet zum Reparieren von Leckagen in gas- und/oder flüssigkeitsumschließenden Behältnissen.

## Patentansprüche

1. Vorrichtung zum Beheben einer Reifenpanne mit einer in den zu reparierenden Reifen einzuführenden Flickflüssigkeit, die sich in einem komprimierbaren flüssigkeitsspeichernden Volumen (100) befindet, wobei das flüssigkeitsspeichernde Volumen (100) mit mindestens einer ersten zu öffnenden Verschlußstelle (60) dicht verschlossen ist und sich in einem Druckbehälter (56) befindet, der mit von einer Druckgasquelle (28) geliefertem Druckgas in einem sich unter der Wirkung des Druckgases vergrößernden Kompressionsraum (54) beaufschlagt wird und die erste Verschlußstelle (60) geöffnet wird, so daß das Volumen (100) über die geöffnete erste Verschlußstelle (60) und einen Zuführschlauch (16) die in ihm befindliche Flickflüssigkeit solange an den Reifen (12) abgibt, bis keine Flickflüssigkeit mehr gefördert wird, wobei die Vorrichtung (10) weiterhin einen Raum (58) aufweist, der über oder in dem Druckbehälter (56) angeordnet ist, wobei in dem Raum (58) nach der Abgabe der Flickflüssigkeit der Druck abfällt und die Druckdifferenz zwischen einem Zuführweg (46) für das Druckgas und dem Raum (58) ansteigt und mindestens eine zweite zu öffnende Verschlußstelle (62), die zwischen dem Zuführweg (46) und dem Raum (58) angeordnet ist, aufgrund der angestiegenen Druckdifferenz geöffnet wird und einen direkten Weg von der Druckgasquelle (28) über den Zuführweg (46), den Raum (58) in den Zuführschlauch (16) an den mit dem Druckgas zu füllenden Reifen (12) freigibt.

2. Vorrichtung nach Anspruch 1,
wobei
die erste Verschlußstelle (60) durch die Druckbeaufschlagung des Kompressionsraums (54) und der resultierenden Komprimierung des Volumens (100) geöffnet wird.

3. Vorrichtung nach Anspruch 1,
wobei,
die erste Verschlußstelle (60) und/oder die zweite Verschlußstelle (62) manuell, mechanisch, elektrisch, pneumatisch oder hydraulisch gesteuert und geöffnet bzw. geschlossen wird.

4. Vorrichtung nach einem der vorhergehenden Ansprüche,
wobei,
das Volumen (100) aus einem zumindest teilweise flexiblen und zusammendrückbaren Behälter (50, 70) besteht.

5. Vorrichtung nach Anspruch 4,
wobei,
das Volumen (100) aus einem Blasenspeicher besteht.

6. Vorrichtung nach einem der Ansprüche 1 bis 3,
wobei,
das Volumen (100) aus einem durch einen Zylinder und einen Kolben definierten Kolbenraum besteht.

7. Vorrichtung nach einem der Ansprüche 1 bis 3,
wobei,
das Volumen (100) eine Flasche aus flexiblem, dichtem Material ist.

8. Vorrichtung nach einem der Ansprüche 1 bis 3,
wobei,
das Volumen (100) eine Tube aus flexiblem, dichtem Material ist.

9. Vorrichtung nach einem der vorhergehenden Ansprüche,
wobei,
das Volumen (100) auswechselbar ausgebildet ist.

10. Vorrichtung nach einem der vorhergehenden Ansprüche,
wobei,
die zweite Verschlußstelle (62) an einer Wandung des Volumens (100) ausgebildet ist.

11. Vorrichtung nach einem der vorhergehenden Ansprüche,
wobei,
die erste Verschlußstelle (60) und/oder die zweite Verschlußstelle (62) mittels einer Schneidevorrichtung geöffnet wird.

12. Vorrichtung nach Anspruch 11,
wobei,
die Schneidevorrichtung als hohle Schneide oder spitze Schraube oder Pfeilspitze ausgebildet ist.

13. Vorrichtung nach einem der vorhergehenden Ansprüche,
wobei,
die erste Verschlußstelle (60) und/oder die zweite Verschlußstelle (62) als Membran ausgebildet ist.

14. Vorrichtung nach einem Ansprüche 1 bis 10,
wobei,
die erste Verschlußstelle (60) und/oder die zweite Verschlußstelle (62) als Ventil ausgebildet ist.

15. Vorrichtung nach einem der Ansprüche 4 bis 9,
wobei,
der Behälter (70) einen mit ihm verbundenen Kopf (73) aufweist, in dem sowohl die erste wie die zweite Verschlußstelle (60, 62) und die Anschlüsse für das Zuführen des Druckgases (44) als auch für die Weiterleitung (18) zum Reifen (12) angeordnet sind, wobei zunächst das Druckgas an der zweiten Verschlußstelle (62) vorbei in den Kompressionsraum (54) geleitet wird und nach dem Leeren des Behälters (70) und Öffnen der zweiten Verschlußstelle (62) dann durch den Behälter (70) hindurch zum Reifen (12) geleitet wird.

16. Vorrichtung nach einem oder mehreren der vorhergehenden Ansprüche,
wobei,
die erste Verschlußstelle (60) schwächer dimensioniert ist als die zweite Verschlußstelle (62).

17. Vorrichtung nach einem der Ansprüche 1 bis 13,
wobei,
die erste und/oder die zweite Verschlußstelle (60, 62) aus einer mit ihrem Rand fest verbundenen Haut mit zur Mitte verlaufenden Rißlinien (66) besteht, wobei das Öffnen der Verschlußstellen (6C, 62) entlang der Rißlinien (66) erfolgt und dazwischenliegende Lappen (64) mit dem Rand verbunden bleiben.

18. Vorrichtung nach einem oder mehreren der vorhergehenden Ansprüche,
wobei,
sowohl die Druckgasquelle (28) mit einem elektrischen Antrieb (24) und der Druckbehälter (56) für das Volumen (100) in einem Gehäuse (22) untergebracht sind, wobei die Druckgasquelle (28) mit dem Druckbehälter (56) über eine Leitung (30) verbunden ist und aus dem Gehäuse (22) heraus nach außen nur eine elektrische Anschlußleitung und der Zuführschlauch (16) herausgeführt sind.

19. Verwendung einer Vorrichtung gemäß Anspruch 1 zum Reparieren von Leckagen in gas- und/oder flüssigkeitsumschließenden Behältnissen.

## Claims

1. Apparatus for repairing a tyre fault with a patching liquid to be introduced into the tyre to be repaired, which is in a compressible liquid-storing volume (100), the liquid-storing volume (100) being hermetically closed by at least one first openable closing position (60), and being in a pressure tank (56), which is pressurized with pressurized gas supplied from a pressurized gas source (28) in a compression chamber (54) expanding under the effect of the pressurized gas, and the first closing position (60) is opened such that the volume (100) outputs the patching liquid located therein through the opened first closing position (60) and a supplying hose (16) to the tyre (12) until patching liquid is no longer conveyed, wherein the apparatus (10) further has a space (58) disposed above or in the pressure tank (56), wherein in the space (58) after output of the patching liquid, the pressure drops and the differential pressure between a supply way (46) for the pressurized gas and the space (58) increases, and at least a second openable closing position (62) disposed between the supply way (46) and the space (58) is opened due to the increased differential pressure, and liberates a direct way from the pressurized gas source (28) through the supply way (46), the space (58) into the supplying hose (16) to the tyre (12) to be filled with the pressurized gas.

2. Apparatus according to claim 1,
wherein the first closing position (60) is opened by the pressurization of the compression chamber (54) and the resulting compression of the volume (100).

3. Apparatus according to claim 1,
wherein the first closing position (60) and/or the second closing position (62) are manually, mechanically, electrically, pneumatically or hydraulically controlled and opened or closed, respectively.

4. Apparatus according to any one of the preceding claims,
wherein the volume (100) consists of an at least partially flexible and compressible tank (50, 70).

5. Apparatus according to claim 4,
wherein the volume (100) consists of a bladder storage.

6. Apparatus according to any one of claims 1 to 3,
wherein the volume (100) consists of a piston space defined by a cylinder and a piston.

7. Apparatus according to any one of claims 1 to 3,
wherein the volume (100) is a bottle of flexible, dense material.

8. Apparatus according to any one of claims 1 to 3,
wherein the volume (100) is a tube of flexible, dense material.

9. Apparatus according to any one of the preceding claims,
wherein the volume (100) is formed exchangeable.

10. Apparatus according to any one of the preceding claims,
wherein the second closing position (62) is formed at a wall of the volume (100).

11. Apparatus according to any one of the preceding claims,
wherein the first closing position (60) and/or the second closing position (62) are opened by means of a cutting device.

12. Apparatus according to claim 11,
wherein the cutting device is formed as a hollow cutting edge or a sharp screw or an arrowhead.

13. Apparatus according to any one of the preceding claims,
wherein the first closing position (60) and/or the second closing position (62) are formed as a membrane.

14. Apparatus according to any one of claims 1 to 10,
wherein the first closing position (60) and/or the second closing position (62) are formed as a valve.

15. Apparatus according to any one of claims 4 to 9,
wherein the tank (70) has a head (73) connected thereto, in which both the first and the second closing position (60, 62) and the connections for supplying the pressurized gas (44) as well as for pass-through (18) to the tyre (12) are disposed, wherein first, the pressurized gas is directed past the second closing position (62) into the compression chamber (54), and after emptying the tank (70) and opening the second closing position (62), then it is directed through the tank (70) to the tyre (12).

16. Apparatus according to one or more of the preceding claims,
wherein the first closing position (60) is more weakly dimensioned than the second closing position (62).

17. Apparatus according to any one of claims 1 to 13,
wherein the first and/or the second closing position (60, 62) consist of a skin fixedly connected to their edge and having scribed lines (66) passing to the center, wherein opening the closing positions (60, 62) is effected along the scribed lines (66), and intermediate flaps (64) remain connected to the edge.

18. Apparatus according to one or more of the preceding claims,
wherein both the pressurized gas source (28) with an electrical drive (24) and the pressure tank (56) for the volume (100) are accommodated in a housing (22), wherein the pressurized gas source (28) is connected to the pressure tank (56) through a conduit (30), and only an electrical lead and the supplying hose (16) are guided outwardly out of the housing (22).

19. Use of an apparatus according to claim 1, for repairing leakages in gas and/or liquid enclosing containers.

## Revendications

1. Dispositif servant à remédier à une crevaison de pneu, comprenant un liquide de réparation à introduire dans le pneu à réparer et disposé dans un volume (100) compressible de stockage de liquide, le volume (100) de stockage de liquide étant fermé étanche grâce à une première zone de fermeture (60) à ouvrir prévue dans une enceinte sous pression (56) soumis à un gaz sous pression provenant d'une source de gaz sous pression (28), et ce dans un volume de compression (54) s'agrandissant sous l'effet du gaz sous pression, la première zone de fermeture (60) étant ouverte de façon à ce que le volume (100) délivre le liquide de réparation qu'il contient en passant par la première zone de fermeture (60) et un flexible d'alimentation (16) jusqu'à ce qu'il n'y ait plus de transfert de liquide de réparation, le dispositif (10) comprenant par ailleurs un espace (58) situé au-dessus de l'enceinte sous pression (56) ou dans celle-ci, la pression qui règne dans le volume de compression (54) étant en baisse après la distribution du liquide de réparation, la différence de pression entre un canal d'alimentation (46) en gaz sous pression et l'espace (58) montant, provoquant alors l'ouverture d'au moins une seconde zone de fermeture (62) à ouvrir disposée entre le canal d'alimentation (46) et l'espace (58), permettant ainsi le transfert direct depuis la source de gaz sous pression (28) par l'intermédiaire du canal d'alimentation (46) et l'espace (58) dans le flexible d'alimentation (16) vers le pneu (12) à remplir avec le gaz sous pression.

2. Dispositif selon la revendication 1,
dans lequel la première zone de fermeture (60) s'ouvre par suite de la mise sous pression du volume de compression (54) et à la compression du volume (100) en résultant.

3. Dispositif selon la revendication 1,
dans lequel la première zone de fermeture (60) et/ou la seconde zone de fermeture (62) est/sont commandée/s et ouverte/s respectivement fermée/s sur voie manuelle, mécanique, électrique, pneumatique ou hydraulique.

4. Dispositif selon l'une des revendications précédentes,
dans lequel le volume (100) est constitué par une enceinte (50, 70) au moins partiellement flexible et compressible.

5. Dispositif selon la revendication 4,
dans lequel le volume (100) consiste dans un accumulateur à vessie.

6. Dispositif selon l'une des revendications 1 à 3,
dans lequel le volume (100) est constitué par un volume à piston défini par un vérin et un piston.

7. Dispositif selon l'une des revendications 1 à 3,
dans lequel le volume (100) est une bouteille en un matériau étanche flexible.

8. Dispositif selon l'une des revendications 1 à 3,
dans lequel le volume (100) est un tube consistant en un matériau étanche flexible.

9. Dispositif selon l'une des revendications précédentes,
dans lequel le volume (100) est prévu sous forme remplaçable.

10. Dispositif selon l'une des revendications précédentes,
dans lequel la seconde zone de fermeture (62) est prévue sur une paroi du volume (100).

11. Dispositif selon l'une des revendications précédentes,
dans lequel l'ouverture de la première zone de fermeture (60) et/ou de la seconde zone de fermeture (62) se fait grâce à un dispositif de coupe.

12. Dispositif selon la revendication 11,
dans lequel le dispositif de coupe est prévu sous forme d'une lame creuse ou d'une vis à pointe conique ou d'une pointe de flèche.

13. Dispositif selon l'une des revendications précédentes,
dans lequel la première zone de fermeture (60) et/ou de la seconde zone de fermeture (62) est/sont prévue/s sous forme de diaphragme.

14. Dispositif selon l'une des revendications 1 à 10,
dans lequel la première zone de fermeture (60) et/ou de la seconde zone de fermeture (62) est/sont prévue/s sous forme de soupape.

15. Dispositif selon l'une des revendications 4 à 9,
dans lequel l'enceinte (70) comporte une tête (73) lui étant associée dans laquelle sont disposées la première et la seconde zone de fermeture (60, 62) ainsi que les raccords d'approvisionnement en gaz sous pression (44) et de transfert (18) vers le pneu (12), le gaz sous pression étant d'abord acheminé dans le volume de compression (54) en laissant de côté la seconde zone de fermeture (62) pour être acheminé, par suite du vidage de l'enceinte (70) et l'ouverture de la seconde zone de fermeture (62), vers le pneu (12) à travers l'enceinte (70).

16. Dispositif selon l'une ou plusieurs des revendications précédentes,
dans lequel le dimensionnement de la première zone de fermeture (60) est moins important que celui de la seconde zone de fermeture (62).

17. Dispositif selon l'une des revendications 1 à 13,
dans lequel la première et/ou la seconde zone de fermeture (60, 62) est/sont constitué/s par une peau solidaire de son/leur bord et comportant des lignes destinées à la rupture (66), l'ouverture des zones de fermeture (60, 62) étant réalisée selon les lignes de rupture (66), des lambeaux (64) restant entre celles-ci étant associés à la périphérie.

18. Dispositif selon l'une ou plusieurs des revendications précédentes,
dans lequel la source de gaz sous pression (28) est munie d'un moteur électrique (24), le volume sous pression (56) prévu pour le volume (100) étant disposé dans un boîtier (22), la source de gaz sous pression (28) étant reliée au volume sous pression (56) par l'intermédiaire d'une conduite (30) et dans lequel il n'y a qu'une conduite de raccordement électrique et le flexible d'alimentation (16) menant à l'extérieur.

19. Utilisation d'un dispositif selon la revendication 1 pour la réparation de fuites survenues dans des enveloppes renfermant des gaz ou liquides.
